(19) **Europäisches Patentamt**
**European Patent Office**
**Office européen des brevets**

(11) **EP 3 185 168 A1**

(12) **EUROPEAN PATENT APPLICATION**

(43) Date of publication:
**28.06.2017 Bulletin 2017/26**

(51) Int Cl.:
***G06F 21/64*** *(2013.01)*

(21) Application number: **15307143.6**

(22) Date of filing: **24.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **GEMALTO SA**
**92190 Meudon (FR)**

(72) Inventors:
• **VIOLA, Francesco**
**92190 MEUDON (FR)**
• **LE DO, Tuan Khanh**
**92190 MEUDON (FR)**

(74) Representative: **Lotaut, Yacine Diaw**
**Gemalto SA**
**Intellectual Property Department**
**6, rue de la Verrerie**
**92190 Meudon (FR)**

(54) **METHOD AND SYSTEM FOR ENHANCING THE SECURITY OF A TRANSACTION**

(57)    This invention concerns a method and system for improving the security of transaction in an emulated Integrated Circuit (ICC). The present invention proposes a method directed for proposing counter-measures against data lifting and code-lifting for dynamically linked native library of a mobile application. The result of the countermeasures method implemented are used as input to compute a countermeasure value which may be used as input during the computation of the cryptogram. If the native shared library is compromised, the computed countermeasure value is wrongly computed. With the wrongly computed cryptogram, the transaction will be rejected at the remote computer side. With the present invention, none stop condition is inserted into the mobile application when the native library is compromised. Instead, the execution of the mobile application continue corrupting silently the computation of the cryptogram, the malicious individual will not be able to understand why and when the generation of the cryptogram is failing.

**Fig. 4**

**Description**

**TECHNICAL FIELD**

The present invention relates generally to the field of payment and authorization methods. More particularly this disclosure relates to using a computing device that does not have or does not rely on a secure element to make payments, authorizations or exchange information with other devices.

Particularly, the present invention relates to a method and system for improving the security of transaction in an emulated Integrated Circuit (ICC).

**BACKGROUND ART**

Advances in the capabilities of communication devices have allowed communication devices such as smart phones to be used as payment instruments to conduct contactless transactions. For example, a communication device can be placed in proximity to an access device such as a point-of-sale (POS) terminal to transfer account information from the communication device to the access device to conduct a transaction.

To provide a secure operating environment to securely store account information on a communication device, secure elements such as SIM cards, micro-SD cards or mobile phone embedded chips has been looked during quite a long time as the right place to securely store the most sensitive part of mobile applications of the service providers.

Indeed, the secure element is considered secure because account information, keys and secret data are stored in tamper- resistant hardware, which protects these information from malware or viruses that may have infected the operating system or an application running on the communication device.

Today, new emerging technologies are coming up, some of them relaying on a new security paradigms, different than traditional secure storage. In current state of the art technology it is possible to emulate a smart card by software and to use it in the context of contactless transactions, using the so called Host Card Emulation (HCE) technology, so it is possible to perform NFC payments by using such a software smart card emulation into a smartphone.

The NFC payment application installed into the smartphone comprises libraries including one or more Java libraries and one or more native libraries. A native library includes functions written in a conventional language that are compiled into machine code. A Java library comprises functions written in a portable language and run by a virtual machine. The NFC payment application may include native library for a number of reasons including performance, access to operating system services which are unavailable to Java code, access to legacy code, and other reasons.

A transaction cryptogram to conduct the transaction is generated at the native library side from information provided by the Java library. The transaction can be authorized by the remote computer based on at least the verification and the validation of the transaction cryptogram.

Traditionally, native libraries, and often the classes which call them, may be installed on a user's device before the execution of applications which use the native libraries. Since native libraries are dynamically loaded, by nature they are susceptible to being compromised. It is generally fairly easy to replace a portion of an application, or a library, written in Java. If the native library is compromised, all applications that use that library, whether protected or not, will be compromised as well when the compromised library is used by that application.

Java has a number of mechanisms to protect Java code from inspection and/or from modification. Some frequently used mechanisms may include signed code, cryptographic obfuscation of the Java Archive (JAR) file and symbolic obfuscation. Code signing allows a program to verify the origin of any classes it is going to call. Cryptographic obfuscation of the JAR file prevents inspection or modification of the contents without knowledge of the obfuscation key and algorithm, and where a special class loader may be used to de-obfuscate the JAR file at runtime. Symbolic obfuscation involves scrambling the symbols of the class files in a JAR file to make it difficult to reverse engineer. While these techniques provide protection to Java code, they work on JAR files, and hence only apply to Java code. Therefore, these techniques do not adequately provide protection to native libraries. While traditional native libraries are typically not obfuscated, they can be signed. However, a Java Virtual Machine does not check signatures on native libraries, nor does it provide a mechanism for Java code to do so.

One traditional means of protecting the integrity of an application is to create a cryptographic binding between its various components. The cryptographic binding allows the caller to verify the origin of the code it is going to call. Optionally, it may also allow the callee to verify the origin of the code which called it. This technique is most often used to create a binding between two native libraries. This technique may also be used to create a binding that protects the integrity of a Java application that contains a native library. However, this method does not adequately prevent the native library from being compromised. In particular, a hacked native library which replaces the original native library may easily inspect the Java code which called it. This means that the keys which are used to create the binding may be easily discovered by the replacement library, allowing the replacement library to successfully impersonate the original library. Furthermore, passing the arguments and return values for each call through a cryptographic process negatively affects the performance of the calls into the native library. Therefore, a traditional cryptographic binding degrades the performance of the application while offering minimal integrity protection.

An attacker may compromise native libraries used by an application either by replacing the library on the file system, or by preloading a native library that exports the same symbols. For example, a first native library may export a symbol aaa and a second native library may also export the symbol aaa. If the second native library is loaded before the first native library can be loaded, the Java application that calls for aaa will call the aaa symbol in the second native library instead of the aaa symbol in the first native library because Java uses the first symbol it sees of a particular name. Thus, the second native library (i.e., a rogue native library) will be called instead of the intended first native library.

One reason why developers use Java is that Java applications frequently do not need to be installed on a user's computer. They may be downloaded from a network as needed. However, if a Java application uses a native library, that application, or a portion of it typically must be installed. This encumbers the deployment of the application and increases the risk of native library being compromised.

Embodiments of the present invention address these and other problems individually and collectively. Specifically, embodiments of the invention address the problem of security concerns with conducting payment transactions with a software smart card emulation into a communication device.

Accordingly, it is an object of the present invention to provide a method for improving the security of native library used to compute the cryptogram.

## SUMMARY OF THE INVENTION

The following summary of the invention is provided in order to provide a basic understanding of some aspects and features of the invention. This summary is not an extensive overview of the invention and as such it is not intended to particularly identify key or critical elements of the invention or to delineate the scope of the invention. Its sole purpose is to present some concepts of the invention in a simplified form as a prelude to the more detailed description that is presented below.

The present invention addresses the aforementioned security drawbacks of transaction with a software smart card emulation into a communication device. The present invention provides techniques for enhancing the security of a communication device (e.g., a communication device) when conducting a transaction using the communication device.

This object is achieved through a method directed to proposing countermeasures against data lifting and code-lifting for dynamically linked native library of a mobile application.

An embodiment of the present invention proposes a method for securing the use of a shared native library written in a more-secure-but-hard-to-implement environment (low-level language such as C) to protect the computation of the transaction cryptogram while still relying on the less-secure-but-easy-to-implement environment (high-level language such as Java) on the remaining parts to save the cost.

In an embodiment, for security reason, the transaction execution (APDU exchange and cryptogram generation) is performed in native code, through a native shared (dynamically linked) library. The present invention propose a method preventing an attacker to code-lift the native shared library, as well as installing a malware on victim's device to monitor the data flow to reuse all the logic without the need to understand what exactly is inside the native shared library.

In an embodiment, the countermeasures method proposed may provide a countermeasure value which may be used as input during the computation of the cryptogram. If the native shared library is compromised, the computed countermeasure value is wrongly computed. With the wrongly computed cryptogram, the transaction will be rejected at the remote computer side.

With the present invention, none stop condition is inserted into the mobile application when the native library is compromised. Instead, the execution of the mobile application continue corrupting silently the computation of the cryptogram, the malicious individual will not be able to understand why and when the generation of the cryptogram is failing.

During transaction, in one embodiment, the computation of the countermeasure value may be performed during the computation of the cryptogram. The computation of the countermeasure value may be virtually undistinguishable from the cryptogram computation. With the present invention, an attacker would not be able to detect the ongoing countermeasures with only the application and/or the software smart card emulation and the undistinguishable countermeasure operations from the cryptogram computation. This makes static and dynamic analysis quite difficult and time consuming for an attacker.

In an embodiment of the present invention, an anti-cloning device fingerprint countermeasure may be applied on the data transitioning from the component in Java to the native shared library into the mobile application. The device fingerprint may be computed at the very first launch of the mobile application. In an embodiment this device fingerprint may be computed on the Java side of the mobile application. The computed fingerprint may be stored in a secure storage.

In an embodiment, for any data transferring, the device fingerprint is extracted from the secure storage and may be used to encrypt the transaction data to get a first encrypted data before sending to the native library. The native library is configured to retrieve the device fingerprint and may decrypt the first encrypted data. If at least one part of the native library has been lifted after the first launch of the application, the retrieved of the device fingerprint may result on a wrong value and the decryption may return an incorrect value. This incorrect value may be used in the computation of the countermeasure value which may be used as input of the computation of the cryptogram which will be sent to a remote computer for verification, validation and authorization of the ongoing transaction.

Moreover, since the device fingerprint may be generated and stored to the storage during installation of the application and the native library is configured to retrieved the device fingerprint, it may be established a binding between the storage of the application and the native library.

In an embodiment of the present invention, an anti-replay countermeasure may be applied on the data transitioning between the component in Java into the application to the native shared library and vice versa. A timestamp may be generated. This timestamp may be used by the component Java to generate an encryption key. This encryption key may be used to encrypt the first encrypted data to get a second encrypted data before sending it to the native library. When the native library received the second encrypted data, the native library may request a timestamp from the system and uses it to derive its encryption key. This derived encryption key may be used to decipher the second encryption data. If the timestamp is wrong, the decryption of the second encrypted data may result on an incorrect value. This incorrect value may be used in the computation of the countermeasure value which may be used as input of the computation of the cryptogram which will be sent to a remote computer for verification, validation and authorization of the ongoing transaction. With this countermeasure, even if an attacker may capture the data on the stack of the process, he would still have to understand all the logic how the transaction data is ciphered with the timestamp and the device fingerprint to recover the original data.

In an embodiment of the present invention, an anti-tampering countermeasure may be applied on the data transitioning from the component in Java into the mobile application to the native shared library. An integrity key is derived from a mobile application certificate such the public key. A first integrity data is generated encoding the transaction data with the derived integrity key. A second integrity data is generated encoding the decrypted second encrypted transaction data with the derived integrity key. The first integrity data and the second integrity data are compared to validate the authenticity of the transaction data. If validation of the authenticity of the transaction data failed, an incorrect value is returned. This incorrect value may be used in the computation of the countermeasure value which may be used as input of the computation of the cryptogram which will be sent to a remote computer for verification, validation and authorization of the ongoing transaction.

In an embodiment of the present invention, an anti-tampering countermeasure may be applied on the certificate of the application. During a built of the application, an integrity key is derived from the certificate of the application. An authentication data is generated by encoding the integrity key with an embedded key into the native library. The embedded key and the authentication data may be protected as secrets on the native library side. During transaction, the native library may generate the integrity key from the application certificate and compute the authentication data of said integrity key with its embedded key. The computed authentication data is compared to the secret authentication data to validate the authenticity of the application certificate. If validation of the authenticity of the certificate failed, an incorrect value is returned. This incorrect value may be used in the computation of the countermeasure value which may be used as input of the computation of the cryptogram which will be sent to a remote computer for verification, validation and authorization of the ongoing transaction.

In an embodiment, the countermeasure value computed by the native library may be the result of an integrity check of the transaction data and an integrity check of the application certificate.

In an embodiment, the present invention provides a strong binding between the secure storage, the application, the shared library and the execution time. Further protections can be applied with the timestamp, such as the sequence of timestamp should always be incremental in a small threshold.

With the present invention, none verification or stop condition are inserted into the mobile application when one of the countermeasure methods failed. Instead, the execution of the application continue corrupting silently the computation of the cryptogram, the malicious individual will not be able to understand why and when the generation of the cryptogram is failing.

To achieve those and other advantages, and in accordance with the purpose of the invention as embodied and broadly described, the invention proposes a system for enhancing security of a communication device when conducting transaction using a transaction application installed into the communication device, wherein

- the transaction application comprising a processing unit and a controlling unit, the controlling unit comprising a security module,
- the processing unit being operated to transmit to the security module of the controlling unit, a transaction data,
- during computation of a transaction cryptogram, the security module being configured to:

   - compute a first integrity check value associated with the transaction data wherein the integrity check value is a return of a verification function of the integrity of the transaction data;
- compute a second integrity check value associated with a certificate of the transaction application wherein the integrity check value is a return of a verification function of the integrity of the certificate;
- apply a transformation operation to the transaction data with the first integrity check value and the second integrity check value to get in return a transformed transaction data,
- compute the transaction cryptogram using the transformed transaction data, wherein the transaction is authorized based on at least whether the transformed transaction data matches the transaction data, if at least one of the integrity check value is a failed value the transformed transaction data is corrupted and the transaction cryptogram wrongly computed is rejected.

The present invention also relates to a transaction application for enhancing security of a communication device when conducting transaction using the communication device, wherein

- the transaction application comprising a processing unit and a controlling unit, the controlling unit comprising a security module,
- the processing unit being operated to transmit to the security module of the controlling unit, a transaction data,
- during computation of a transaction cryptogram, the security module being configured to:

  - compute a first integrity check value associated with the transaction data wherein the integrity check value is a return of a verification function of the integrity of the transaction data;
  - compute a second integrity check value associated with a certificate of the transaction application wherein the integrity check value is a return of a verification function of the integrity of the certificate;
  - apply a transformation operation to the transaction data with the first integrity check value and the second integrity check value to get in return a transformed transaction data,
  - compute the transaction cryptogram using the transformed transaction data, wherein the transaction is authorized based on at least whether the transformed transaction data matches the transaction data, if at least one of the integrity check value is a failed value, the transformed transaction data is corrupted and the transaction cryptogram wrongly computed is rejected.

According to an embodiment of the present invention, the computation of the first integrity check value associated with the transaction data comprises the following steps:

- the processing unit being operated to encrypt the transaction data with a generated device fingerprint key to provide a first encrypted data,
- the processing unit being operated to encrypt the first encrypted data with a key derived from a generated timestamp to provide a second encrypted data,
- the processing unit being operated to transmit to the controlling unit the second encrypted data,
- the controlling unit being operated to decrypt the second encrypted data with a key derived from a generated timestamp to provide a first decrypted data,
- the controlling unit being operated to decrypt the first decrypted data with a generated device fingerprint key to provide a decrypted transaction data,
- the controlling unit being operated to transmit to the security module the decrypted transaction data,
- the processing unit being operated to apply an integrity algorithm to the transaction data with the application certificate to provide a first integrity data,
- the processing unit being operated to transmit to the security module of the controlling unit the first integrity data,
- during computation of the transaction cryptogram, the security module being operated to apply the integrity algorithm to the decrypted transaction data with the application certificate to provide a second integrity data,
- during computation of the transaction cryptogram, the security module being operated to apply a comparison operation on the first integrity data and the second integrity data to provide the first integrity check value.

According to an embodiment of the present invention, the device fingerprint is generated by inputting information pertaining to hardware characteristics of the communication device into a one-way cryptographic function that generates a unique sequence of data, the hardware characteristic being a serial number or other assigned hardware identifier of components of the communication device.

According to an embodiment of the present invention, the device fingerprint is a PUF value generated with a physically unclonable function (PUF) circuit.

According to an embodiment of the present invention, the device fingerprint is generated once and stored in a secure storage of the communication device or stored as hard-coded text into the code of both the controlling unit and the processing unit.

According to an embodiment of the present invention, the computation of the second integrity check value associated with the application certificate comprises the following steps:

- during computation of the transaction cryptogram, the security module being operated to:
- apply an integrity algorithm to the application certificate with an embedded key previously generated to provide a first authentication data,
- extract a second authentication data computed during compilation time of the transaction application by applying the integrity algorithm to the application certificate with the embedded key previously generated,
- apply a comparison operation on the first authentication data and the second authentication data to provide the second integrity check value.

According to an embodiment of the present invention, the embedded key and the second authentication data previously generated are stored as hard-coded text into the code of the security module.

According to an embodiment of the present invention, the security module is a white box cryptography or a Trusted Execution Environment.

According to an embodiment of the present invention, the processing unit and the controlling unit are in the form of a software developer kit integrated into the transaction application.

According to an embodiment of the present invention, the processing unit is implemented in platform independent code and the controlling unit is implemented in native code.

According to an embodiment of the present invention, the platform independent code is Java.

The present invention also relates to a method for enhancing security of a communication device when conducting a transaction using a transaction application of the communication device according to one the previous claims, the method comprising:

- during computation of a transaction cryptogram, the transaction application of the communication device being operated to:
- compute a first integrity check value associated with a transaction data wherein the integrity check value is a return of a verification function of the integrity of the transaction data;
- compute a second integrity check value associated with a certificate of the transaction application wherein the integrity check value is a return of a verification function of the integrity of the certificate;
- apply a transformation operation to the transaction data with the first integrity check value and the second integrity check value to get in return a transformed transaction data,
- compute the transaction cryptogram using the transformed transaction data, wherein the transaction is authorized based on at least whether the transformed transaction data matches the transaction data, if at least one of the integrity check value is a failed value, the transformed transaction data is corrupted and the transaction cryptogram wrongly computed is rejected.

The present invention also relates to a communication device comprising:

- a processor; and
- a memory coupled to the processor and storing a transaction application that performs operations for enhancing security of the communication device when conducting transaction using the communication device according to any of the previous claims.

The foregoing is a summary and thus may contain simplifications, generalizations, and omissions of detail; consequently, those skilled in the art will appreciate that the summary is illustrative only and is not intended to be in any way limiting.

For a better understanding of the embodiments, together with other and further features and advantages thereof, reference is made to the following description, taken in conjunction with the accompanying drawings. The scope of the invention will be pointed out in the appended claims.

## BRIEF DESCRIPTION OF THE DRAWINGS

The following detailed description will be better understood with the drawings, in which:

FIG. 1 illustrates the different entities in a communication device involved in a transaction.
FIG. 2 illustrates an example of implementation of the different entities of a system involved in a transaction.

FIG. 3 illustrates the different components in a mobile application involved in a transaction.

FIG. 4 is a logic flow diagram in accordance with an exemplary embodiment of this invention during the computation of a cryptogram.

## DETAILED DESCRIPTION OF THE EMBODIMENTS OF THE INVENTION

It will be readily understood that the components of the embodiments, as generally described and illustrated in the figures herein, may be arranged and designed in a wide variety of different configurations in addition to the described example embodiments. Thus, the following more detailed description of the example embodiments, as represented in the figures, is not intended to limit the scope of the embodiments, as claimed, but is merely representative of example embodiments.

Reference throughout the specification to one embodiment or an embodiment means that a particular feature, structure, or characteristic described in connection with an embodiment is included in at least one embodiment of the subject matter disclosed. Thus, the appearance of the phrases in one embodiment or in an embodiment in various places throughout the specification is not necessarily referring to the same embodiment. Further, the particular features, structures or characteristics may be combined in any suitable manner in one or more embodiments.

As used herein, the singular forms a, an and the are intended to include the plural forms as well, unless the context clearly indicates otherwise. It will be further understood that the terms comprises and/or comprising, when used in this specification, specify the presence of stated features, integers, steps, operations, elements, and/or components, but do not preclude the presence or addition of one or more other features, integers, steps, operations, elements, components, and/or groups thereof.

In the following description, numerous specific details are provided to give a thorough understanding of embodiments. One skilled in the relevant art will recognize, however, that the various embodiments can be practiced without one or more of the specific details, or with other methods, components, materials, et cetera. In other instances, well-known structures, materials, or operations are not shown or described in detail to avoid obfuscation.

The present invention is not specific to any particular hardware or software implementation, and is at a conceptual level above specifics of implementation. It is to be understood that various other embodiments and variations of the invention may be produced without departing from the spirit or scope of the invention. The following is provided to assist in understanding the practical implementation of particular embodiments of the invention.

The same elements have been designated with the same referenced numerals in the different drawings. For clarity, only those elements and steps which are useful to the understanding of the present invention have been shown in the drawings and will be described.

Further, the mechanisms of data communication between the parties and their environment have not been detailed either, the present invention being here again compatible with usual mechanisms.

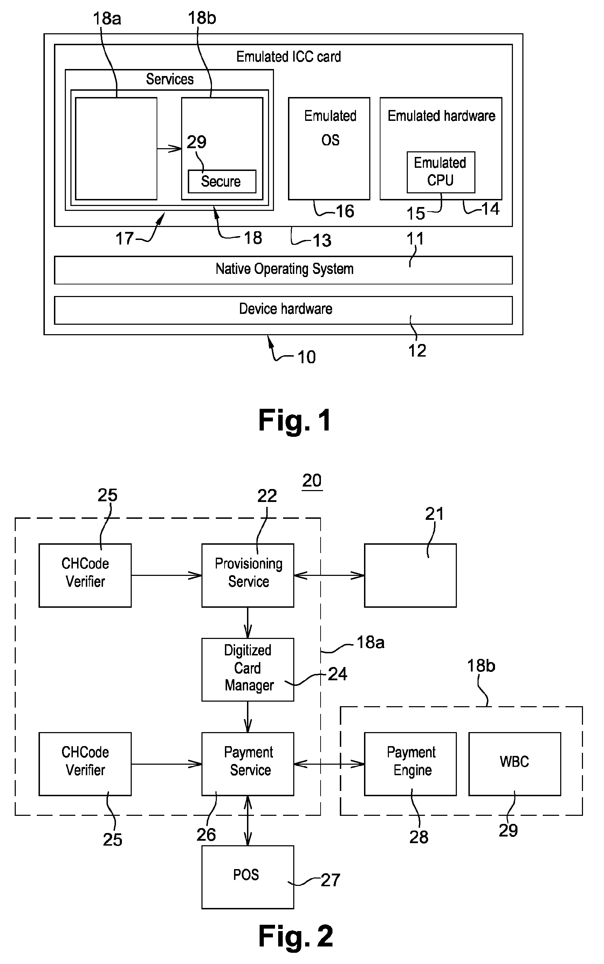

Furthermore, the connecting lines shown in the various figures contained herein are intended to represent exemplary functional relationships and/or physical couplings between the various elements. It should be noted that many alternatives or additional functional relationships or physical connections may be present in a practical system. Furthermore, the various entities in FIG. 1 to FIG. 4 may communicate via any suitable communication medium (including the Internet), using any suitable communication protocol.

Described herein in various implementations are systems and methods for providing secure communication, secure data transfer and storage, authentication and transaction authorization which can be performed through a communication device with or without a secure element. Embodiments of the present invention provide techniques for enhancing the security of the communication device when conducting a transaction using the communication device without involving a secure element. The techniques described herein can be used with a communication device that may or may not have a secure element, because the techniques do not require the use of a secure element but the secure element could be present.

In the example of implementation described hereinafter, the present invention provide techniques for enhancing the security of the communication device when conducting a transaction using the communication device by using an emulated Integrated Circuit Card ICC also called emulated ICC card. In a non-limitative embodiment, the emulated integrated circuit card ICC is an emulated smart card. In a non-limitative example, the emulated smart card is an emulated banking card, such as an emulated EMV card.

Emulation refers to the use of a computer program or hardware to provide (i.e., emulate) the functionality of other software or hardware. An emulator can include modules that correspond to hardware components of an emulated device. For example, an emulator can provide emulation of a central processing unit (CPU), memory subsystem, and input/output devices. In the case of emulation by a software-based emulator, an operating system and other applications can be interpreted by the emulator, rather than being run by native hardware. A software-based emulator can also emulate a particular hardware architecture than the architecture of a host device on which the emulator executes.

For example, in the embodiment described herein, an emulator is configured to emulate the integrated circuit (e.g., a CPU) that has a different instruction set than a physical integrated circuit of the host device. The emulated integrate circuit can duplicates the instruction cycle and instruction cycle timing of the physical integrated circuit.

The emulated ICC card can include emulated hardware, operating systems, software modules, applications, plugins, runtime environments, graphics engines, input/output methods, drivers, abstraction layers clients, connection protocols, security protocols, storage, memory, and virtualized peripherals. Further, the emulated ICC card can select different CPU instructions sets for operation that can be different from the instruction set used by the CPU of the host device.

The emulated ICC card can execute on an operating system (OS) of a host device and can enable device-based authentication/authorization services for mobile and electronic commerce merchants and service providers.

For example, the emulated ICC card can provide transaction authorization request through a mobile application and cloud-based web services in a secure manner. In other instances, the emulated ICC card enables the secure storage, exchange, and transmission of information to and from various forms of mobile and non-mobile devices, instruments, computers, and other systems.

Further, various devices, systems, programs, instruments, and equipment can be emulated using the techniques described herein, such as, kiosks, workstations, handheld devices for point of sale systems, banking devices, automated teller machines, retail and payment systems, healthcare devices, defense and government equipment, voting and data collection devices, and other data storage and transmission devices.

Prior to discussing the details of some embodiments of the present invention, description of some terms may be helpful in understanding the various embodiments.

A cryptogram may refer to an encrypted representation of some information. A cryptogram can be used by a recipient to determine if the generator of the cryptogram is in possession of a proper key, for example, by encrypting the underlying information with a valid key, and comparing the result to the received cryptogram.

An issuer may typically refer to a business entity (e.g., a bank) that maintains an account for a user that is associated with a communication device such as an account enrolled in the mobile application 18 installed on the communication device 10. An issuer may also issue account parameters associated with the account to a communication device. An issuer may be associated with a host system that performs some or all of the functions of the issuer on behalf of the issuer.

An access device may be any suitable device for communicating with a merchant computer or payment processing network, and for interacting with a payment device, a user computer apparatus, and/or a user mobile device. An access device may generally be located in any suitable location, such as at the location of a merchant. An access device may be in any suitable form. Some examples of access devices include POS devices, cellular phones, PDAs, personal computers (PCs), tablet PCs, hand-held specialized readers, set-top boxes, electronic cash registers (ECRs), automated teller machines (ATMs), virtual cash registers (VCRs), kiosks, security systems, access systems, Websites, and the like. An access device may use any suitable contact or contactless mode of operation to send or receive data from, or associated with, a portable communication device. In some embodiments, where an access device may comprise a POS terminal, any suitable POS terminal may be used and may include a reader, a processor, and a computer-readable medium. A reader may include any suitable contact or contactless mode of operation. For example, exemplary card readers can include radio frequency (RF) antennas, optical scanners, bar code readers, or magnetic stripe readers to interact with a portable communication device.

A key may refer to a piece of information that is used in a cryptographic algorithm to transform input data into another representation. A cryptographic algorithm can be an encryption algorithm that transforms original data into an alternate representation, or a decryption algorithm that transforms encrypted information back to the original data. Examples of cryptographic algorithms may include triple data encryption standard (TDES), data encryption standard (DES), advanced encryption standard (AES), etc.

An authorization request message may be an electronic message that is sent to request authorization for a transaction. The authorization request message can be sent to a payment processing network and/or an issuer of a payment card. An authorization request message according to some embodiments may comply with ISO 8583, which is a standard for systems that exchange electronic transaction information associated with a payment made by a user using a payment device or payment account. The authorization request message may include information that can be used to identify an account. An authorization request message may also comprise additional data elements such as one or more of a service code, an expiration date, etc. An authorization request message may also comprise transaction information, such as any information associated with a current transaction, such as the transaction amount, merchant identifier, merchant location, etc., as well as any other information that may be utilized in determining whether to identify and/or authorize a transaction. The authorization request message may also include other information such as information that identifies the access device that generated the authorization request message, information about the location of the access device, etc.

In the following description:

- source code refers to programming code that is a platform independent code. The source code is interoperable as it may be run without being modified on any kind of devices such as an integrated circuit card ICC which supports a virtual machine VM. It is written in a portable language and run by a virtual machine. Once compiled, the source code generates virtual machine instructions;
- virtual machine instructions refers to programming code that is run through a virtual machine instead of a unit processor, such as the unit processor of the ICC. Such programming code is a platform-independent code. Said virtual machine instructions are issued from the compilation of source code;
- a virtual machine VM is an interpreter which decodes and executes virtual machine instructions;
- a native function refers to programming code which when compiled generates a native code;
- native code (also called machine language) refers to programming code that is configured to run on the unit processor. Native code will generally not run if used on a unit processor other than the one it was specifically written for. It is a platform-dependent code. In the example of the emulated integrated circuit card ICC, a native code is linked to the emulated unit processor of said emulated integrated circuit card;
- an operation (also called functionality) refers to a functional process; and
- an instruction refers to a code instruction.

In non-limitative examples:

- the source code may be written in Java, .NET or JavaCard™ or any existing platform independent language.
- the native function may be written in the C language, assembler language or C++ language or any existing platform dependent language.

These non-limitative examples will be taken in the following description.

Some embodiments are described herein in the context of an EMV-compliant payment transaction at a merchant Point of Sale (POS) terminal using near field communications (NFC). However, it will be appreciated that the embodiments described herein may be used in connection with ATM transactions, unattended kiosk or vending machine transactions, e-commerce and other similar transactions. Moreover, there are many protocol variations on EMV for NFC transactions. The embodiments described herein may be employed with other protocols or standards.

Details of some embodiments of the present invention will now be described.

Referring to FIG. 1, in one implementation, a user communication device 10 comprises a native operating system 11 executing on a device hardware 12. The user device 10 can be a mobile or other device, such as a smartphone, smart watch, smart glasses, tablet computer, desktop computer, portable computer, television, gaming device, music player, mobile telephone, laptop, palmtop, smart or dumb terminal, network computer, personal digital assistant, wireless device, information appliance, workstation, minicomputer, mainframe computer, or other computing device that can execute the functionality described herein.

The native operating system 11 can be a mobile, desktop, server, or other operating system such as an Apple iOS® platform, a Google Android™ platform, a Microsoft Windows@ operating system, an Apple OS X® operating system, a Linux® operating system, a variants of a UNIX® operating system, and the likes.

Device hardware 12 can include one or more processors suitable for the execution of a computer program, including both general and special purpose microprocessors. Generally, a processor receives instructions and data stored on a read-only memory or a random access memory or both. Information carriers suitable for embodying computer program instructions and data include all forms of nonvolatile memory. One or more memories can store instructions that, when executed by a processor, form the modules and other components described herein and perform the functionality associated with the components. The processor and the memory can be supplemented by, or incorporated in special purpose logic circuitry.

The user device 10 can include a plurality of software processing modules stored in a memory and executed on a processor. By way of illustration, the program modules can be in the form of one or more suitable programming languages, which are converted to machine language or object code to allow the processor or processors to execute the instructions. The software can be in the form of a standalone application, implemented in a suitable programming language or framework.

In one implementation, a software processing module of the user device 10 comprises the emulated ICC card 13. The emulated ICC card 13 can include emulated hardware 14 and emulated software, such as emulated operating system 16. Emulated hardware 14 can include one or more emulated processors, such as emulated central processing unit (CPU) 15, emulated memories and other storage mediums, emulated input and/or output devices, emulated communications ports and other interfaces, and so on. The emulated operating system 16 can be configured to communicate with the native operating system 11 through an emulated network interface of the emulated ICC card 13.

The emulated ICC card 13 can also comprise services container 17, in which one or more services can execute. The services 17 can include, but are not limited to, secure input/output, storage, key management, Quick Response Code (QRC) management, near field communication (NFC), mobile applications 18, Host Card Emulation and other security and storage services.

The mobile application 18 may be provided by a mobile application provider. For example, if the provider of mobile application 18 is an issuer, the mobile application 18 may be a mobile banking application or a separate mobile payment application. If the provider is a mobile wallet provider such as a mobile network operator or third- party wallet provider that supports multiple issuers, the mobile application 18 may be a mobile wallet application. For merchants, the mobile application 18 may be a merchant's own mobile application from which consumers can conduct e-commerce or point of sale transactions with that merchant, or may be a mobile wallet application that supports multiple merchants. The provider of the mobile application 18 can be others suitable entities.

In a non-limitative implementation, the card emulation technology (e.g., Host Card Emulation (HCE), etc.) allows to emulate a smartcard on the communication device 10 to allow the mobile application 18 running on the communication device 10 to conduct transactions such as contactless transaction. In the card emulation environment, the mobile application 18 can access the contactless interface of the communication device 10 via the operating system (OS) 11 of the communication device 10.

Examples of contactless interface may include one or more radio frequency (RF) transceivers that can send and receive communications using near-field communications (NFC), or other radio frequency or wireless communication protocols such as Bluetooth, Bluetooth low-energy (BLE), Wi-Fi, iBeacon, etc. In some embodiments, contactless interface may include an optical interface (e.g., a display screen) to present payment information in the form of an image such as a quick response (QR) code, or bar code, etc. to a contactless which includes an optical code scanner or reader.

In an embodiment, the mobile application 18 comprises a processing unit 18a and a controlling unit 18b. In an embodiment, the controlling unit 18b may comprise a security module 29. The security module 29 may be implemented with a highest level of security.

In an embodiment, the security module 29 may comprise a White box cryptographic, or "WB cryptographic," which is a unique cryptographic technology that protects cryptographic algorithms so that their operations can execute within a hostile environment without leaking a cryptographic key and other cryptographic values.

In another embodiment, the security module 29 may comprise a TEE (Trusted Execution Environment).

In a non-limitative example, the processing unit 18a of the mobile application 18 is implemented in Java and the controlling unit 18b in native code.

The processing unit 18a and the controlling unit 18b of the mobile application can be in the form of a software developer kit (SDK)) integrated into the mobile application to support the transaction functionalities. The processing unit 18a and the controlling unit 18b may perform functions to facilitate transactions such as to generate transaction cryptograms for transmission to a remote system 21.

An exemplary of a transaction communication system 20 in which the various exemplary embodiments described herein can be implemented is now described with respect to FIG. 2. The components of system 20 may include a remote system 21 to manage transactions conducted using the communication device 10. The remote system 21 may be implemented using one or more computing devices or computers, such as one or more server computers, and can be associated with or be operated by a service provider such as an issuer, payment processor, and/or other suitable entities. The remote system 21 may manage user accounts, provide verification functions for transactions, manage lifecycle messages from issuer/host system, as well as initiate lifecycle management events.

To ensure that the transactions are processed appropriately, several core functions are implemented in the remote system 21 (not shown) to manage the deployment and usage of the account parameters. These functions may include provisioning, active account management, verification for payment, transaction processing, lifecycle management, and post-payment processing.

The remote system 21 may perform enrollment functions to enroll a mobile cardholder, and a set of provisioning functions that facilitates the preparation and delivery of account parameters. The remote system 21 may perform account parameters replenishment functions to facilitate the account parameter replenishment process for the provision on communication device, and account management functions that manage the replenishment.

The processing unit 18a of the application may comprise a provisioning service 22 configured to facilitate communications between the mobile application 18 executing on the communication device 10 and other entities in the remote system 21. The provisioning service 22 may communicate with the remote system 21 via a communications network such as the Internet.

In some embodiments, the provisioning service 22 may implement authentication and signature functionalities to authenticate the user and/or the communication device 10 when the communication device 10 communicates with the other entities of the remote system 21. The authentication functionalities may ensure that a user and/or a communication device communicating with the system is an authorized one.

The provisioning service 22 may comprises a set of provisioning functions that facilitates the management of account parameters. The provisioning service 22 may comprise account parameters replenishment functions to facilitate the account parameter replenishment process from the remote system 21 on the communication device 10.

The processing unit 18a may comprise a digitized card manager 23 configured to manage appropriately on the communication device the set of account parameters provided to the mobile application 18b by the remote system 21. The digitalized card manager 23 comprises a set of functionalities to manage account parameters for transactions conducted using the user communication device 10.

The processing unit 18a of the application 18a may comprise a Card Holder Code Verifier 25. This Card Holder Code Verifier 25 provides the means to manage in a secure way user inputs in the format of digits. It can be used to manage PIN and activation code inputs.

The processing unit 18a may comprise a payment service 26. This component may comprise:

- an interface for the payment application to allow the user to retrieve information on the card provisioned (state of activation, card details). This information is retrieved from the digitized card manager 23.
- an interface to allow the payment application to communicate with an access device terminal 27 through contact or contactless (Bluetooth, NFC) communication.
- an interface to access to a payment engine 28 of the controlling unit 18b of the mobile application 18.

The payment engine 28 may be a component completely implemented in a native code, C or C++. The payment engine 28 may implement VISA, MasterCard payment flows, and/or any transaction flow.

In an embodiment, the native library of the controlling unit 18b may be embedded in a Java Native Interface (JNI) library. The Java Native Interface (JNI) may provide a facility to bridge two-way interoperations and interactions between the Processing unit 18a Java world (which includes a JVM, Java applications, and libraries in bytecode loaded within the JVM) and the controlling unit 18b native code world (which applications or shared libraries are written in other languages, such as C/C++/assembler, and compiled into the emulated CPU).

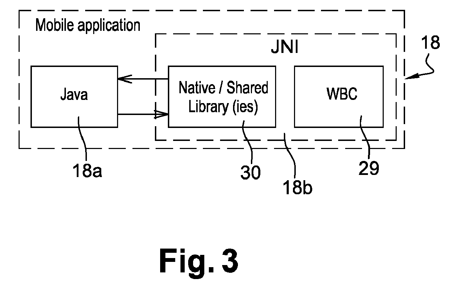

As illustrated in the implementation of FIG.3, the JNI of the controlling unit 18b may comprise a native shared library 30. The native shared library 30 may include native language code. Native language code includes native language instructions (e.g., a native language subroutine). For example, native language code can include a C language function and/or subroutine. The native shared library 30 may provide a standard interface for Java applications.

There are two kinds of interactions: down-calls when a Java application code calls a native method and up-calls when a native method accesses data or invokes methods of the given Java application via a JNI environment. When called, the native code bypasses the virtual machine, directly invoking resources of the emulated operating system and the emulated processor.

To protect the computation of the transaction cryptogram, the JNI may comprise at least one security module 29 implemented in native functions (C/C++). The security module 29 can co-execute within the JVM via the JNI so that the given Java application can invoke secure operations within the security module 29 where such secure operations can access the Java application and other Java library code loaded within the JVM and perform protections. During transaction, the security module 29 acts as the root of the trust and as a protection trampoline and engine within the JVM to launch and perform the various cryptography computation of the authorization request to be send to the remote system 21.

In the implementation illustrated hereinafter, the security module 29 is a White box cryptographic, or WB cryptographic, which is a unique cryptographic technology that protects cryptographic algorithms so that their operations can execute within a hostile environment without leaking a cryptographic key and other cryptographic values.

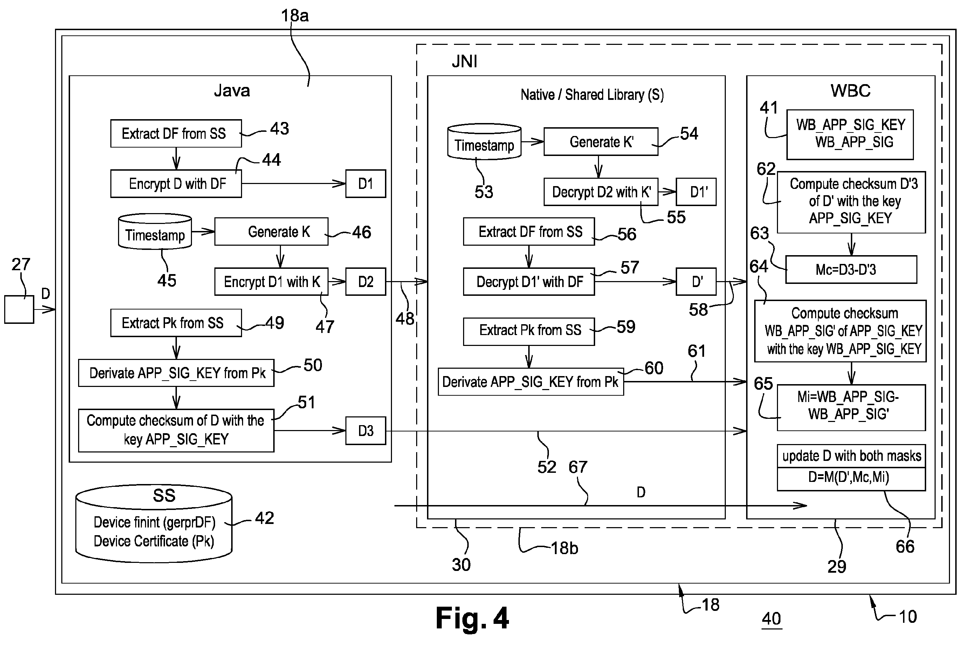

FIG. 4 illustrates an example communication flow between a Java processing unit 18a and the native controlling unit 18b during a transaction, according to some embodiments.

A certificate is associated with the mobile application 18. The certificate will usually be authorized by a body known as a certification authority (i.e., certificate authority) which stores the public key in a database and distributes it to any other entity which requests it. The public/private key pairs of the certificate may be generated using RSA or elliptic curve cryptography (ECC) techniques as well as any other relevant techniques associated with public key infrastructure (PKI).

In the implementation described herein after, the public key PK of the certificate may be used to derivate key which will be involved to the computation of the countermeasure value.

In step 41, during compilation time, a key derivation function may be applied to the public key PK to derive the key APP_SIG_KEY. The key derivation may be a key derivation hash function as a SHA256.

In an embodiment, a master derivation key (MDK) associated to the mobile application 18 is used to generate an authentication key WB_APP_SIG_KEY. This authentication key WB_APP_SIG_KEY can be generated by a remote key management system during compilation time of the native library. The authentication key WB_APP_SIG_KEY may be stored into the secure module 29 of the controlling unit 18b of the mobile application 18. In an embodiment, the authentication key WB_APP_SIG_KEY is stored as hard-coded text into the code of the secure module 29.

An authentication data WB_APP_SIG is generated by encoding the derived key APP_SIG_KEY with the authentication key WB_APP_SIG_KEY with an encoding algorithm that takes the derived key APP_SIG_KEY and the authentication key WB_APP_SIG_KEY as inputs and generates the authentication data as an output.

In an embodiment, the encoding algorithm is a symmetric key encryption algorithm. The symmetric key encryption may include block cipher algorithms, such as the Data Encryption Standard (DES) based algorithm(s) and Advanced Encryption Standard (AES) based algorithm(s), and stream cipher algorithms, such as RC4.

In another embodiment, the encoding algorithm is an integrity algorithm. The integrity algorithm may be a hash algorithm or any suitable algorithm that may be, for example, one version of a cyclic redundancy check (CRC) algorithm, message-digest (MD) algorithm, or secure hash algorithm (SHA). The integrity function used to generate the authentication data is a one-way mathematical function. That is, the derived key APP_SIG_KEY and the authentication key WB_APP_SIG_KEY cannot be recovered from the authentication data. Also, the authentication data is unique to the particular derived key APP_SIG_KEY and the authentication key WB_APP_SIG_KEY that are used.

The computed authentication data WB_APP_SIG may be stored into a secure memory. In an embodiment, the authentication data WB_APP_SIG is stored as hard-coded text into the code of the secure module 29. This embedded authentication data WB_APP_SIG serves to ensure that the certificate (public key) of the transaction application 18 remains unaltered during a transaction.

It should be noted that step 41 may start before or during compilation time of the native side of the mobile application 18.

In step 42, a device fingerprint DF to protect against subversion by substitution may be generated. In an embodiment, the device fingerprint DF may be generated by inputting information pertaining to hardware characteristics of the communication device 10 into a cryptographic hash function. The cryptographic hash function, in this example, is preferably a one-way cryptographic function that generates a unique sequence of bits or hash code. The hardware characteristic may be a serial number or other assigned hardware identifier of components of the communication device 10.

In another embodiment, the device fingerprint DF may be a PUF value generated with a physically unclonable function (PUF) circuit. PUFs are functions that are derived from the inherently random, physical characteristics of the communication device10 in which they are built. For example, a silicon PUF may exploit variations in the delay through interconnects and gates or slight differences in threshold voltage. Since the PUF exploits physical variations of the device or material in which it is built, each PUF should provide a unique (although perhaps noisy) response.

The generated device fingerprint DF and the associated public key PK of the mobile application 18 may be stored in a secure storage SS of the emulated ICC card 13. The generated device fingerprint DF and the associated public key PK of the mobile application 18 may be stored in a storage of the communication device 10.

It should be noted that step 42 may start before, during the compilation time of the mobile application 18 or at the very first launch of the mobile application 18.

In an embodiment the generated device fingerprint DF and the public key PK may be stored as hard-coded text into both the code of the native library 30 during compilation time.

This device fingerprint DF may be generated after the communication device 10 is manufactured and before it is packaged for shipment to the first distributor in the supply chain. In this case, this generated device fingerprint DF stored into the device communication may be requested and stored into the secure storage SS by the mobile application 18 at the first launch of said mobile application.

Of course these examples of generation and storage of the device fingerprint DF are merely examples, various existing methods and means for obtaining the device fingerprint data and storage may be used and others data can be employed as device fingerprint DF such as an identifier of the CPU, sensors identifiers, etc.

Once the mobile application 18 is installed into the communication device 10 and ready to use, the communication device 10 can be used to execute a transaction. In the embodiment illustrated in FIG. 4, the executed transaction is by contactless, for example, by placing the communication device in proximity to a contactless reader of an access device 27.

During the transaction, the mobile application 18 may receive, store, and/or dynamically build information such as transaction flow parameters related to the contactless transaction in order to return the necessary information to the contactless reader for the transaction to be successfully executed.

During this transaction, the Java processing unit 18a may extract the device fingerprint DF from the secure storage SS, in step 43. In step 44, this extracted device fingerprint DF is used to encrypt transaction data D received by the mobile application 18 from the access device 27. The transaction data D may comprise authorized amount, other amount, terminal country code, terminal verification results, transaction currency code, transaction data, transaction type, and/or an unpredictable number etc...

The processing unit 18a encrypts the transaction data D with the device fingerprint DF to provide as output an encrypted data D1.

In step 45 a timestamp engine (not illustrated) of the mobile application 18 may generate a first timing information (e.g., such as timestamps, sequence numbers, or the like). The generated first timestamp may be used for any suitable purpose, such as stamping the transaction data D with a capture time or interval. The timestamp engine may use a clock of the communication device 10 to generate the first timestamp.

In an embodiment, the first timestamp may be a time interval which is bound with the transaction data D. In an exemplary embodiment of the mobile application 18, the timestamp engine generates a first timestamp having a predetermined number of bits and including a count field. The count indicates the time interval since the timer was started. The time interval may be defined according to a predetermined interval of time needed by the mobile application 18 to compute the cryptogram transaction.

In step 46, the processing unit 18a may derive a first encryption key K from the generated timestamp. There are several existing different algorithms (not described) in use for deriving a key from data.

In step 47, the first encryption key K may be used to encrypt the encrypted transaction data D1 to get a verifier data D2. In step 48, the verifier data D2 is sent to the payment engine 28 of the native controlling unit 18b through the native shared library.

At step 49, the Java processing unit 18a may extract the mobile application certificate public key PK from the secure storage SS. In step 50, a key derivation function of the processing unit 18a may be applied to the public key PK to derive the key APP_SIG_KEY. In step 51, the processing unit 18a may apply an integrity algorithm to the transaction data D with the derived key APP_SIG_KEY to provide an integrity data D3. The integrity algorithm may be a one-way cryptographic function that generates a unique sequence of bits. The integrity algorithm may be a hash algorithm or any suitable algorithm that may be, for example, one version of a cyclic redundancy check (CRC) algorithm, message-digest (MD) algorithm, or secure hash algorithm (SHA). In step 52, the integrity data D3 may be send to the secure mobile 29 of the controlling unit 18b through the native library 30.

The native library 30 may process all the data received and extract all the data needed and send them to the security module 29 for computation of the cryptogram.

In an embodiment, step 53 to step 61 are performed on native library 30 side. In step 53, a second timestamp is generated. In step 54, the native library 30 may derive a second encryption key K' from the generated second timestamp. In step 55, the second encryption key K' may be used to decrypt the received verifier data D2 to get a decrypted encrypted transaction data D1'.

In step 56, the native library 30 may extract the device fingerprint DF from the secure storage SS or from its code. In another embodiment, the device fingerprint DF is generated by the native library 30 according to the generation mechanism implemented in step 42.

In step 57, this extracted device fingerprint DF is used to decrypt the decrypted encrypted transaction data D1' returned by step 55. In step 57, the native library 30 may provide in return a decrypted transaction data D'. In step 58, the native library 30 may send the decrypted transaction data D' to the security module 29 for the computation of the cryptogram.

At step 59, the native library 30 may extract the device certificate public key PK from the secure storage SS or from its code. In step 60, a key derivation function of the native library 30 may be applied to the public key PK to derive the key APP_SIG_KEY. In step 61, the native library 30 may send the key APP_SIG_KEY to the security module 29 for the computation of the cryptogram. In an embodiment, the security module 29 may apply the derivation algorithm to the public key PK to derive the key APP_SIG_KEY. In this case, the native library 30 may send the public key PK to the security module 29.

In an embodiment, step 62 to step 66 are performed on the security module 29 side to generate the computation of the cryptogram transaction from data received from the native library 30.

In step 62, the security module 29 may apply the integrity algorithm to the received decrypted transaction data D' with the derived key APP_SIG_KEY to provide an integrity data D3'. In step 63, the security module 29 may compare the integrity data D3 received at step 52 with the computed integrity data D3' in step 62. This comparison may return a first check value Mc. In case the first check value is not correct (different of zero), i.e., in case the integrity check fails, it can be determined that at least one of the following component is corrupted: the storage, the transaction data, the timestamp, and/or the device fingerprint DF.

In step 64, the security module 29 may extract the embedded key WB_APP_SIG_KEY from its code. The security module 29 may generate an authentication data WB_APP_SIG' by applying the same algorithm than step 41 in conjunction with the extracted embedded key WB_APP_SIG_KEY and the received derived key APP_SIG_KEY.

In step 65, the security module 29 may extract the stored authentication data WB_APP_SIG from its code. The security module 29 may compare the extracted authentication data WB_APP_SIG with the computed authentication data WB_APP_SIG' in step 64. This comparison may return a second check value Mi. In case the second check value is not correct (different of zero), i.e., in case the integrity check fails, it can be determined that the application certificate is corrupted.

The security module 29 may compute a countermeasure value through an operation of the first check value Mc and the second check value Mi. In an embodiment, this operation may be an addition.

During the transaction, the native library 30 provides, at step 67, the transaction data D received from the access device 27 to the security module 29. In step 66, the security module 29 may generate a new transaction data D" from the transaction data D received from the access device 27 and the computed countermeasure value though a transformation operation. The transformation operation is configured so that the transaction data D is equal to the new transaction data D" when none integrity checks failed. If the integrity check at step 63 and step 65 are correct, the countermeasure value may be equal to zero. The new transaction data D" is then equal to the received transaction data D. the transformation operation may be an addition in this example.

The security module 29 computes the transaction cryptogram with the new transaction data D". The cryptogram can be understood as a signature on the new transaction data D". The security module 29 generates the cryptogram by encoding the new transaction data D" with a session key using for example a hash function that takes the new transaction data D" and the session key as inputs and generates the cryptogram as an output. The hash function used to generate the cryptogram is a one-way mathematical function. This cryptogram may be computed according to the EMV specifications published by EMVCo and available on EMVCo's web site.

After the access device 27 has received the transaction cryptogram, the access device 27 may generate a transaction authorization request message to request authorization of the transaction from the issuer. For example, in some embodiments, the transaction authorization request message may include at least the track-2 equivalent data and the transaction cryptogram. The transaction authorization request is sent by the access device 27 to the remote system 21 for verification and validation.

Thus, assuming the remote system 21 knows the session key used by the security module 29, once the remote system 21 has been provided the transaction data D by the access device 27, the remote system 21 can generate a cryptogram from the transaction data D using its known cryptographic key and comparing it to the cryptogram that was generated by the controlling unit 18b.

If at least one integrity check is wrong the transaction data is corrupted during the transformation operation and the cryptogram is wrongly computed. The remote system 21 rejects the transaction. The user can be notified of the failure. The user device can be blacklisted of performing transaction.

It should be understood that the different steps processed by the java processing unit 18a, the native library 30 and the security remote 29 described above is just an example, and that the messaging sequence in some embodiments may have different variations. In some embodiments, the computation of the verifier data D2 and the integrity data D3 into the processing unit 18a may be performed in parallel or sequentially. In some embodiments, the computation of the transaction data D' and the key APP_SIG_KEY into the native library may be performed in parallel or sequentially. In some embodiments, the computation of the first check value Mc and the second check value MI into the security module 29 may be performed in parallels or sequentially.

## EXEMPLARY IMPLEMENTATION:

Following is an exemplary implementation for enhancing the security of a communication device when conducting a transaction using the communication device, according to some embodiments. In this implementation, the device communication is a smartphone and the mobile application is a contactless payment application.

An HCE-based NFC payment SDK (where there is no presence of a Secure Element) is implemented. The SDK contains all the flows from provisioning, replenishment of one-time-use transaction keys (under EMV tokenization technology), and the transaction itself. Most of the components are coded in Java. For security reason, the transaction execution (APDU exchange and cryptogram generation) is performed in native C, which is done in a shared (dynamically linked) library for example an ELF-formatted .so file.

Prior to discussing the details of this implementation, description of some terms may be helpful in understanding:

- D: transaction data managed in the Java side to be transferred to the JNI side.
- DF: device fingerprint
- TS: timestamp
- PK: public key of the certificate
- AC: Anti-Cloning function that ciphers data D into D1
- AR: Anti-Replay function that ciphers D1 into D2
- AT: Anti-Tampering function that computes the integrity data D3
- CM: Comparison Masking function to create a mask that indicates if the integrity data D3 is corrupted or not
- IM: Integrity masking function to validate the authenticity of PK.
- WB_APP_SIG: The checksum of PK generated with a key WB_APP_SIG_KEY. The WB_APP_SIG being pre-configured before or during building the White Box.
- WB_APP_SIG_KEY: an authentication key that is used to validate the authenticity of the PK. The WB_APP_SIG_KEY being pre-configured before or during building the White Box.

Anti-cloning countermeasure with Device Fingerprint:

The device fingerprint may be computed from Java side. It is computed for this implementation at the very first time the SDK is used (after application installation), and persisted to the secure storage for any subsequent use. For Native side, the fingerprint may be read from the storage every time it is used or generated.

The device fingerprint DF may be composed of the following data:

- IMEI,
- Device communication identifier,
- 8-byte presence mask of supported features (1 byte to indicate a feature exists). Below is the list of features which can be used:

  - FEATURE_AUDIO_LOW_LATENCY
  - FEATURE_BLUETOOTH
  - FEATURE_CAMERA
  - FEATURE_CAMERA_AUTOFOCUS
  - FEATURE_CAMERA_FLASH
  - FEATURE_CAMERA_FRONT
  - FEATURE_LIVE_WALLPAPER
  - FEATURE_LOCATION
  - FEATURE_LOCATION_GPS
  - FEATURE_LOCATION_NETWORK
  - FEATURE_MICROPHONE
  - FEATURE_NFC
  - FEATURE_SENSOR_ACCELEROMETER
  - FEATURE_SENSOR_BAROMETER
  - FEATURE_SENSOR_COMPASS
  - FEATURE_SENSOR_GYROSCOPE
  - FEATURE_SENSOR_LIGHT
  - FEATURE_SENSOR_PROXIMITY
  - FEATURE_SIP
  - FEATURE_SIP_VOIP
  - FEATURE_TELEPHONY
  - FEATURE_TELEPHONY_CDMA
  - FEATURE_TELEPHONY_GSM
  - FEATURE_TOUCHSCREEN
  - FEATURE_TOUCHSCREEN_TOUSCHREEN_MULTITOUCH
  - FEATURE_TOUCHSCREEN_TOUCHSREEN_DISTINCT
  - FEATURE_TOUCHSCREEN_MULTITOUCH_JAZZHAND
  - FEATURE_WIFI
  - FEATURE_FAKETOUCH
  - FEATURE_FAKETOUCH_MULTITOUCH_DISTINCT
  - FEATURE_FAKETOUCH_MULTITOUCH_JAZZHAND
  - FEATURE_SCREEN_LANDSCAPE
  - FEATURE_SCREEN_PORTRAIT
  - FEATURE_USB_ACCESSORY
  - FEATURE_USB_HOST
  - FEATURE_WIFI_DIRECT

This countermeasure not only binds the transaction data D with the fingerprint of the device but also binds the transaction data D to the Secure Storage of the SDK (as the fingerprint is generated in the Java interface only once), using a function called AC, as described below:

D1 = AC (D, DF) = ENC (data=D, key=SHA256 (FP))

The decryption (reversion of AC, or AC$^{-1}$) of D1 is the same as AC. The decryption is performed in the native side (Payment Engine).

Anti-replay countermeasure with timestamp

A timestamp is generated, this timestamp may be associated with a current time window called Precision Range (PR). This timestamp binds the transaction data D with the current time window using a function called AR.

The pair of (PR, 2*PR) may be used to indicate the minimum and maximum acceptable time differences wherein derived key from the timestamp is accepted. The pair of (PR, 2*PR) is determined according to the interval of time since the data is prepared in Java until it reaches the JNI.

In an embodiment, the derived key from the timestamp is considered accepted according to the followings rules:

- If the difference in time between the timestamp generated in Java side and the one generated in Native is less than PR, the derived key from the timestamp is the expected one;
- If the difference in time between the timestamp generated in Java side and the one generated in Native is between PR to 2*PR, the derived key from the timestamp may be the expected one (but not guaranteed, depending on which timeframes).
- If the difference in time between the timestamp generated in Java side and the one generated in Native exceeds 2*PR, the derived key from the timestamp is always incorrect not the expected one.

The AR and reverse AR ($AR^{-1}$) functions have the following implementation:

Java side (AR):

- Get the current timestamp in millisecond.
- The PR is set at 10 milliseconds.
- D2 = AR (D1, TS) = ENC (data=D1, key= SHA256 (TS))
- Send D2 to native shared library 30, using current communication protocol (which may be TLV concatenation).

Native shared library 30 ($AR^{-1}$):

- Generate timestamp candidates, with the range with block of PR that the current timestamp falls into:

$$D1 = AR^{-1}(D2, TS)\ DEC\ (data=D2, key= SHA256\ (TS))$$

The data D1 is now ready to be used by the reverse AC ($AC^{-1}$) to recover D.

Anti-tampering countermeasure with the application public key.

This countermeasure methods allows to bind the transaction data D to the application certificate, in particular the public key PK of the certificate.

- The data D is signed by a key derived from the PK (called APP_SIG_KEY).
- A checksum of the APP_SIG_KEY is pre-computed and a pre-coded into the WBC to validate its authenticity.

The detailed algorithm goes as following:

Java side:

- Collect PK.
- Signing the data D to make the integrity data D3, using function called AT.

$$D3 = AT\ (D, PK) = HMAC\ (data=D, key=SHA256\ (PK))$$

- The integrity data is then appended to the end of the verified D2 to generate a message to send to the native library for the computation of the cryptogram.

Native library side:

- Extract D2 and D3 from the received message.
- Reverse D2 to get back to D' using the $AR^{-1}$ and $AC^{-1}$ as described earlier in the Anti-Cloning and Anti-Replay sections of this example of implementation.
- Collect PK from JNI functions and generate the derived key called APP_SIG_KEY.

$$\text{APP\_SIG\_KEY} = \text{SHA256 (PK)}$$

The APP_SIG_KEY is preferably computed outside the White Box but could be done by the White Box side.

- Pass D', D3 and APP_SIG_KEY to the White Box, together with other information for computing the cryptogram.

WBC side:

- The checksum is re-computed for D with the given APP_SIG_KEY and the data D', using the function AT, as described before, to generate D3' (the integrity data computed by the White Box).
  D3' = AT (D', APP_SIG_KEY) = HMAC (data= D, key=APP_SIG_KEY)
- The Checksum Mask is applied to the two values D3 and D3', using the function CM. The mask return 0 indicating equality between the two values. Mc = CM(D3, D3') = XOR(D3, D3')
- The Integrity Mask is applied to the APP_SIG_KEY and the WB secrets WB_APP_SIG and WB_APP_SIG_KEY to validate the authenticity of the PK.

$$\text{Mi} \quad = \quad \text{IM} \quad \text{(APP\_SIG\_KEY)} \quad = \quad \text{XOR} \quad \text{(WB\_APP\_SIG,} \quad \text{HMAC}$$
$$\text{(data=APP\_SIG\_KEY, key=WB\_APP\_SIG\_KEY))}$$

- The computed integrity value Mi and Mc contain respectively information about the authenticity and integrity of the data D and the public key PK. These computed integrity value contain only 0 in the good condition. Using this information, the transaction data D is manipulated in a way to discretely fail the cryptogram validation if the integrity checks are incorrect, by using function M.

$$\text{D'' = M (D, Mc, Mi)}$$

With this approach, if there has been a compromise in the integrity check operations, the computed cryptogram will fail. In an embodiment, the cryptogram is sent to the access device 27 or the remote system 21. If the verification of the computed cryptogram failed, the remote system 21 can apply a risk of management policy. In an embodiment, the remote system 21 can alert the user, informing him that his user device is compromised and should be denied authorization or otherwise banned from performing transactions. User can be worn by the remote system by a SMS message. However, the subject matter herein is not limited to the example in which users are notified of unsuccessful transaction and/or the threat through the remote system. Users may be notified in any manner.

In an embodiment, the mobile application 18 may be a merchant's own mobile application from which consumers can conduct e-commerce or point of sale transactions with that merchant, or may be a mobile wallet.

Embodiments of the present invention can be performed by a communication devices with or without a secure element. Embodiments of the present invention provide techniques for enhancing the security of a communication device when conducting a transaction using the communication device without involving a secure element. The techniques described herein can be used with a communication device that may or may not have a secure element, because the techniques do not require the use of a secure element but the secure element could be present.

The features and functions of the various implementations can be arranged in various combinations and permutations, and all are considered to be within the scope of the disclosed invention. Accordingly, the described implementations are to be considered in all respects as illustrative and not restrictive. The configurations, materials, and dimensions described herein are also intended as illustrative and in no way limiting. Similarly, although physical explanations have been provided for explanatory purposes, there is no intent to be bound by any particular theory or mechanism, or to limit the claims in accordance therewith.

The terms and expressions employed herein are used as terms and expressions of description and not of limitation, and there is no intention, in the use of such terms and expressions, of excluding any equivalents of the features shown and described or portions thereof. In addition, having described certain implementations in the present disclosure, it will be apparent to those of ordinary skill in the art that other implementations incorporating the concepts disclosed herein can be used without departing from the spirit and scope of the invention.

## Claims

1. A system for enhancing security of a communication device when conducting transaction using a transaction application installed into the communication device, wherein

   - the transaction application comprising a processing unit and a controlling unit, the controlling unit comprising a security module,
   - the processing unit being operated to transmit to the security module of the controlling unit, a transaction data,
   - during computation of a transaction cryptogram, the security module being configured to:

     - compute a first integrity check value associated with the transaction data wherein the integrity check value is a return of a verification function of the integrity of the transaction data;
     - compute a second integrity check value associated with a certificate of the transaction application wherein the integrity check value is a return of a verification function of the integrity of the certificate;
     - apply a transformation operation to the transaction data with the first integrity check value and the second integrity check value to get in return a transformed transaction data,
     - compute the transaction cryptogram using the transformed transaction data, wherein the transaction is authorized based on at least whether the transformed transaction data matches the transaction data, if at least one of the integrity check value is a failed value the transformed transaction data is corrupted and the transaction cryptogram wrongly computed is rejected.

2. The system according to the previous claim, wherein the computation of the first integrity check value associated with the transaction data comprises the following steps:

   - the processing unit being operated to apply an integrity algorithm to the transaction data with the application certificate to provide a first integrity data,
   - the processing unit being operated to transmit to the security module of the controlling unit the first integrity data,
   - during computation of the transaction cryptogram, the security module being operated to apply the integrity algorithm to a decrypted transaction data provided by the controlling unit with the application certificate to provide a second integrity data,
   - during computation of the transaction cryptogram, the security module being operated to apply a comparison operation on the first integrity data and the second integrity data to provide the first integrity check value.

3. The system according to the previous claim, wherein the decrypted transaction data provided by the processing unit comprises the following steps:

   - the processing unit being operated to encrypt the transaction data with a generated device fingerprint key to provide a first encrypted data,
   - the processing unit being operated to encrypt the first encrypted data with a key derived from a generated timestamp to provide a second encrypted data,
   - the processing unit being operated to transmit to the controlling unit the second encrypted data.

4. The system according to the previous claim, wherein the decrypted transaction data provided by the processing unit comprises the following steps:

- the controlling unit being operated to decrypt the second encrypted data with a key derived from a generated timestamp to provide a first decrypted data,
- the controlling unit being operated to decrypt the first decrypted data with a generated device fingerprint key to provide a decrypted transaction data,
- the controlling unit being operated to transmit to the security module the decrypted transaction data.

5. The system according to the previous claims 3 to 4, wherein the device fingerprint is generated by inputting information pertaining to hardware characteristics of the communication device into a one-way cryptographic function that generates a unique sequence of data, the hardware characteristic being a serial number or other assigned hardware identifier of components of the communication device.

6. The system according to the previous claims 2 to 4, wherein the device fingerprint is a PUF value generated with a physically unclonable function (PUF) circuit.

7. The system according to the previous claims 3 to 6, wherein the device fingerprint is generated once and stored in a secure storage of the communication device or stored as hardcoded data into the code of both the controlling unit and the processing unit.

8. The system according to the previous claim, wherein the computation of the second integrity check value associated with the application certificate comprises the following steps:

- during computation of the transaction cryptogram, the security module being operated to:
- apply an integrity algorithm to the application certificate with an embedded key previously generated to provide a first authentication data,
- extract a second authentication data computed during compilation time of the transaction application by applying the integrity algorithm to the application certificate with the embedded key previously generated,
- apply a comparison operation on the first authentication data and the second authentication data to provide the second integrity check value.

9. The system according to the previous claim, wherein the embedded key and the second authentication data previously generated are stored as hardcoded data into the code of the security module.

10. A method for enhancing security of a communication device when conducting a transaction using a transaction application of the communication device according to one of the previous claims, the method comprising:

- during computation of a transaction cryptogram, the transaction application of the communication device being operated to:
- compute a first integrity check value associated with a transaction data wherein the integrity check value is a return of a verification function of the integrity of the transaction data;
- compute a second integrity check value associated with a certificate of the transaction application wherein the integrity check value is a return of a verification function of the integrity of the certificate;
- apply a transformation operation to the transaction data with the first integrity check value and the second integrity check value to get in return a transformed transaction data,

- compute the transaction cryptogram using the transformed transaction data, wherein the transaction is authorized based on at least whether the transformed transaction data matches the transaction data, if at least one of the integrity check value is a failed value the transformed transaction data is corrupted and the transaction cryptogram wrongly computed is rejected.

11. A communication device comprising:

- a processor; and
- a memory coupled to the processor and storing a transaction application that performs operations for enhancing security of the communication device when conducting transaction using the communication device according to any of the previous claims.

12. A transaction application for enhancing security of a communication device when conducting transaction using the communication device according to any of the previous claims, wherein

- the transaction application comprising a processing unit and a controlling unit, the controlling unit comprising a security module,
- the processing unit being operated to transmit to the security module of the controlling unit, a transaction data,
- during computation of a transaction cryptogram, the security module being configured to:

- compute a first integrity check value associated with the transaction data wherein the integrity check value is a return of a verification function of the integrity of the transaction data;
- compute a second integrity check value associated with a certificate of the transaction application wherein the integrity check value is a return of a verification function of the integrity of the certificate;
- apply a transformation operation to the transaction data with the first integrity check value and the second integrity check value to get in return a transformed transaction data,
- compute the transaction cryptogram using the transformed transaction data, wherein the transaction is authorized based on at least whether the transformed transaction data matches the transaction data, if at least one of the integrity check value is a failed value the transformed transaction data is corrupted and the transaction cryptogram wrongly computed is rejected.

13. The transaction application according to any of the previous claims, wherein the security module is a white box cryptography or a Trusted Execution Environment.

14. The transaction application according to any of the previous claims, wherein the processing unit and the controlling unit are in the form of a software developer kit integrated into the transaction application.

15. The transaction application according to any of the previous claims, wherein the processing unit is implemented in platform independent code and the controlling unit is implemented in native code.

**Fig. 1**

**Fig. 2**

Mobile application

JNI

18

Java

Native / Shared Library (ies)

WBC

18a

30

18b

29

# Fig. 3

Fig. 4

Europäisches
Patentamt

European
Patent Office

Office européen
des brevets

# EUROPEAN SEARCH REPORT

**Application Number**

EP 15 30 7143

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/191244 A1 (DAI XIA [US]) 4 August 2011 (2011-08-04) * paragraphs [0007], [0043] - [0050]; figure 2a * | 1-15 | INV. G06F21/64 |
| Y | WO 2015/042548 A1 (VISA INT SERVICE ASS [US]) 26 March 2015 (2015-03-26) * abstract; figures 1,2,6 * | 1-15 | |
| Y | US 2004/117262 A1 (BERGER JEFFREY KEITH [US] ET AL) 17 June 2004 (2004-06-17) * abstract; figure 6 * | 1-15 | |
| Y | US 2015/178724 A1 (NGO HAO [US] ET AL) 25 June 2015 (2015-06-25) * abstract; figures 1,8,10 * | 1-15 | |

**TECHNICAL FIELDS SEARCHED (IPC)**

G06F

The present search report has been drawn up for all claims

| Place of search | Date of completion of the search | Examiner |
|---|---|---|
| Munich | 27 April 2016 | Kerschbaumer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 7143

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2016

| Patent document cited in search report | | Publication date | Patent family member(s) | | Publication date |
|---|---|---|---|---|---|
| US 2011191244 | A1 | 04-08-2011 | NONE | | |
| WO 2015042548 | A1 | 26-03-2015 | AU | 2014321178 A1 | 14-04-2016 |
| | | | CA | 2924683 A1 | 26-03-2015 |
| | | | US | 2015088756 A1 | 26-03-2015 |
| | | | WO | 2015042548 A1 | 26-03-2015 |
| US 2004117262 | A1 | 17-06-2004 | AU | 2003295630 A1 | 29-07-2004 |
| | | | JP | 2006510993 A | 30-03-2006 |
| | | | US | 2004117262 A1 | 17-06-2004 |
| | | | WO | 2004061554 A2 | 22-07-2004 |
| US 2015178724 | A1 | 25-06-2015 | US | 2015178724 A1 | 25-06-2015 |
| | | | US | 2015180836 A1 | 25-06-2015 |
| | | | WO | 2015095771 A1 | 25-06-2015 |

EPO FORM P0459

For more details about this annex : see Official Journal of the European Patent Office, No. 12/82